Europäisches Patentamt

(19) European Patent Office

Office européen des brevets

(11) Publication number: **0 168 210**
**A2**

(12) # EUROPEAN PATENT APPLICATION

(21) Application number: **85304737.1**

(22) Date of filing: **03.07.85**

(51) Int. Cl.⁴: **A 23 L 1/36**
**C 11 B 1/06**

(30) Priority: **09.07.84 US 629065**

(43) Date of publication of application:
**15.01.86 Bulletin 86/3**

(84) Designated Contracting States:
**AT BE CH DE FR GB IT LI LU NL SE**

(71) Applicant: **NABISCO BRANDS INC.**
**Nabisco Brands Plaza**
**Parsippany New Jersey 07054(US)**

(72) Inventor: **Simelunas, William J.**
**38 Iona Place**
**Glen Rock New Jersey(US)**

(72) Inventor: **Wilkins, Howard**
**56 Flax Hill Road**
**Brookfield Connecticut(US)**

(72) Inventor: **Gannis, Peter M.**
**50 Kensington Road**
**Stamford Connecticut(US)**

(74) Representative: **Thomas, Roger Tamlyn et al,**
**D. Young & Co. 10 Staple Inn**
**London WC1V 7RD(GB)**

(54) **Process for preparing low-fat nuts.**

(57) Disclosed is an improved process for preparing low-fat nuts, such as peanuts. Several problems have been encountered in commercial processing by prior art procedures. It has been found recently that, while the speed of pressing is improved by employing moisture contents of less than 5%, these products for some reason cause excessive foaming during final roasting. It has now been found that high pressing speed can be retained at higher moistures. It has also been found that reduced extraction of phosphatides which are related to foam production can be achieved by a process wherein, after initially roasting, the nuts are pressed between platens constructed to remove expressed oil through the platen surfaces. The pressed nuts are then rehydrated and roasted.

EP 0 168 210 A2

./...

FIG. 1

# PROCESS FOR PREPARING LOW-FAT NUTS

## BACKGROUND OF THE INVENTION

The present invention relates to nuts; and particularly to an improved process for preparing defatted nuts.

The term "nuts" as used in this description includes whole nuts and pieces of nuts such as peanuts, cashews, almonds, Brazil nuts, filberts, pecans, walnuts, and the like. For purposes of conciseness in description, the following disclosure will center around the production of low-fat peanuts. It is not intended, however, to be limited to peanuts because the principles which they will apply for peanuts should apply to other nuts.

The basic procedures for preparing partially-deffated nuts have been known for a number of years. For example, in U.S. Patent No. 2,003,415 to Ammann and U.S. Patent No. 3,294,549 to Vix et al, there are described procedures for pressing the oil from nuts such as peanuts. Broadly, these methods include the steps of pressing nuts until the desired quantity of oil is removed, and then steaming or cooking the partially-defatted nuts in water until the nuts are reconstituted to substantially their original size and shape. Both of these patents discuss the virtues of partially defatted nuts in the diet.

In U.S. 3,294,549, Vix et al indicate that the resulting high protein products have excellent flavor, aroma, taste, texture, and appearance, and good shelf life. They indicate that their process can be performed on raw, toasted, blanched or unblanched nuts with equivalent results.

- 2 -

One series of Examples discusses hot pressing wherein nuts are steamed or otherwise moistened and then further heated to a temperature (104°C) less than required for roasting for flavor development; however, this hot pressing technique resulted excessive breakage. This hot pressing technique is similar to that of Ammann who disclosed heating to a temperature of 80° to 90°C prior to pressing. Further work on the Vix et al process is described in a series of articles entitled "Development and Potential of Partially Defatted Peanuts," _Peanut Journal and Nut World_, January and February 1967, and an article entitled "Low Calorie Peanuts," _Food Processing/Marketing_, September.

Later workers, encouraged by the apparent appeal of products of that type to weight conscious consumers, continued to work in this area. Because the caloric density of fat is twice that of protein and carbohydrates, the removal of such a significant amount of fat from nut products could result in significant calorie reductions. Moreover, because these products were typically less dense than the normally treated non-defatted nuts, yet further calorie reductions were obtainable. In U.S. Patent No. 3,645,752 to Baxley, there is disclosed a process which is said to improve the flavor of partially-defatted nuts by quenching them in a flavored oil after roasting. In U.S. Patent No. 3,740,236, also to Baxley, it is indicated that the roasted peanut flavor appears to be reduced in proportion to the percentage of the peanut oil removed during the pressing process. Baxley, however, does not directly confront this flavor loss but provides a process for improving flavor of the nuts once the flavor is diminished. According to this patent, the defatted nuts are reconstituted in an aqueous binder solution which can also contain flavors.

Gannis et al, in U.S. Patent No. 4,049,833, also recognized the adverse effect on the flavor and texture of partially-defatted nuts. To correct this, Gannis et al suggested contacting the partially-defatted nuts with a glycerol-containing solution during reconstitution, prior to roasting. They disclosed that after roasting, the treated nuts have improved flavor, texture and storage stability.

The exact reason for the flavor loss in the partially-defatted nuts is not fully understood. The Doctoral Dissertation of M. E. Mason entitled Procedures in Studying and Factors Influencing the Quality and Flavor of Roasted Peanuts, Oklahoma State University, 1963, pages 63 and 64, indicates that oil pressed from peanuts contain aleurone grains, among other particulates, which appear to contain flavor precursors. The Mason dissertation, however, was not concerned with the preparation of low-fat nuts, but simply gaining a better knowledge of the source and identification of flavor principals in peanuts.

U.S. Patent 4,329,375 to Holloway and Wilkins discloses a process for preparing low-fat nuts, such as peanuts which retain more of their natural flavor and texture than products prepared by earlier prior art procedures. They disclosed that they had found several factors important to achieving a high quality product. Among these were pre-roasting the nuts to partially develop a roasted nut flavor and color, pressing

- 4 -

only after equilibration of the internal nut moisture, and limiting the amount of oil extraction. Products prepared according to the process have achieved commercial success; however, the processing time is greater than would be desired and, while the process results in the production of more acceptable (whole or half, but unbroken) nuts than the prior art, improved yields are still desired.

In our European Patent Application No. 84306201.9 (Inventors: Wilkins and Gannis filed September 11, 1984 and published under No. 139459 on May 2, 1985, there is disclosed an improvement in processing. There it is disclosed that adjusting the moisture for pressing could be accomplished by premoistening prior to the initial roast stage to improve processing efficiency and decrease the amount of unacceptable nuts.

There remains a need, however, for further improvements in pressing efficiency as well as percentage of acceptable nuts. Moreover, commercial implementation of these processes has from time to time resulted in excessive foaming in the hot oil·bath used to finally roast the nuts. Analyses indicate that the extraction of phosphatides is connected with the adverse foaming and that the problem is reduced when higher moisture contents, on the order of 5 to 8%, are employed. Unfortunately, it has not been possible, heretofore to achieve commercially satisfactory oil extraction rates at such high moistures.

0168210

- 5 -

## SUMMARY OF THE INVENTION

It is an aim of the present invention to provide an improved process for preparing partially-defatted nuts of high efficiency which produces high yields of acceptable product.

It is another and more specific aim of the present invention to provide a process of improved yield and efficiency for preparing partially-defatted peanuts which provide a satisfying combination of peanut flavor, texture, and mouthfeel in a peanut product which also offers a significant reduction in caloric intake.

These and other aims are accomplished according to at least the preferred embodiments of the present invention which provides an improved process for preparing reduced calorie roasted nuts having good natural roasted flavor and texture. The process comprises: feeding preroasted nuts, having a uniform moisture content, into a pressing chamber defined by a cylindrical chamber wall and two opposed platens perpendicular to the central axis of the chamber wall; decreasing the distance between the platens to press the nuts sufficiently to express oil form the nuts; removing oil expressed from the nuts through discharge openings in at least one of said platens; hydrating the nuts to a moisture content sufficient to cause the nuts to regain approximately their normal shape during a roasting step; and roasting the nuts.

0168210

- 6 -

## BRIEF DESCRIPTION OF THE DRAWINGS

The invention will be better understood and its advantages more apparent from the following detailed description, especially when read in light of the appended drawings wherein:

Figure 1 is a perspective view schematically depicting a pressing apparatus useful according to the invention; and

Figure 2 is an enlarged view of a single platen employed in the press of Fig. 1.

## DETAILED DESCRIPTION OF THE PREFERRED EMBODIMENT

The present invention enables the production of partially-defatted nuts of all varieties while retaining a high degree of their natural flavor and aroma. The nuts can be blanched or unblanched as desired. Similarly, the nuts can be whole or split depending upon the desired end-use.

It has been determined according to the present invention that the natural peanut or other nut flavor and texture can be obtained to the same degree as in the processes of Holloway and Wilkins, and Wilkins and Gannis, referred to above while improving the efficiency and results of the process. The preferred process reduces phosphatide extraction which has been related to foaming during final oil roasting. The process also decreases pressing time. There is evidence that the process of the invention improves yields of acceptable nuts, producing fewer cracked (unacceptable) nuts and more whole (unsplit and uncracked) nuts.

According to the invention, nuts, such as peanuts, are subjected to an initial roasting operation and then pressed at a controlled moisture content after decorticating and before or after blanching. It is preferred to remove the nut shell, i.e., decorticate, prior to the roasting operation, to save energy and to enable efficient moisture control. Also, where roasting in oil is desired, the outer shell will further cause losses of oil. Blanching, i.e., removing the skin, is preferred in some respects and is less preferred in others. For example, where red skin peanuts are to be air roasted, it is sometimes preferred to leave the skins on until after the initial roasting operation. This has been suggested as a means to improve flavor. However, where the initial roast is to be done by oil roasting, it is usually preferred to blanch prior to roasting.

The moisture content for pressing is controlled to a level effective for oil removal, preferably to within the range of from about 4 to about 8%. Moisture contents of above 5% are preferred as they best achieve the advantages offered by the invention. Most preferred moistures at this stage are from 5 to 7%. The desired moisture content can be achieved by first pre-roasting and then moistening and equilibrating, or it can be done as disclosed by Wilkins and Gannis, this latter procedure being preferred. According to that disclosure, initial roasting is conducted on nuts having a suitable moisture content for a period of time and at a temperature effective to develop a roasted nut flavor and color and to achieve the desired moisture content. Typically, this will require roasting at an initial nut moisture content of from about 8 to about 12% and a temperature of from about 120°C to about 175°C. More preferred moistures prior to roasting are within the range of from 10 to 11%. Where the nuts have a suitable moisture content, they can be roasted in this initial stage directly as is, with no need for wetting. This however, is not typical, because nuts in their raw state are most often available at moistures of around 7 to 8%, and are wetted by suitable means to bring them to the preferred moisture contents for processing according to the invention. Any suitable means can be employed, such as simple spraying, followed by holding for a time effective to absorb the desired amount of moisture. The amount of water sprayed should be measured to prevent excessive hydration because subsequent drying either separately or as part of the initial roast tends to cause flavor loss. A hold time of about 4 to 10 minutes should be sufficient, although any time which is effective can be employed. While not preferred, due to its expected reduction in flavor, the nuts can be moistened with wet steam. Preferably, nuts which typically have an initial moisture of about 7 to about 8%, are sprayed with sufficient water at 15° to 30°C to bring the moisture content of the nuts up to about 10 to 11% after holding at 15°to 30°C for about 5 minutes.

After assuring a suitable moisture content, the nuts are roasted by any effective means under conditions of time and temperature to develop a roasted nut flavor and color and to achieve the desired moisture content for efficient pressing to remove oil without unduly damaging the nuts. For air roasting, the time will typically be in the range of from about 2 to about 60 minutes. Oil roasting times will be shorter. Preferably, this initial roasting operation will be done in air at a temperature of from about 135°C to about 165°C for a period of from about 3 to about 15 minutes. The roasting should be as rapid as possible consistent with maintenance of moderate temperature and uniform moisture contents throughout the cross-sections of the individual nuts. Where long roast times are employed, it is necessary to use higher initial moisture contents and excessive flavor is lost by volatilization. Where temperatures are too intense, flavors are also volatilized too rapidly. Presently, air roasting at about 155°C to about 165°C for from about 4 to about 8 minutes appears optimum.

In addition to developing the flavor and the color of the nut, this initial roast also partially denatures the protein and reduces the moisture content to the desired level, preferably from 5 to 7%. It is possible to roast to lower moisture contents; however, the advantages of the invention will be less pronounced as the moisture content decreases. In the case of blanched peanuts, it is possible to establish a colorimetric standard to determine the desired end-point for roasting. According to this procedure, an Agtron color photometer is employed in the green mode using the 12 and 90% plates to define the scale. With this as a standard, reflectance values of from about 25 to about 40, typically about 33, are believed to be about optimum in terms of flavor and overall physical characteristics of the product nuts.

The pre-roasted nuts, having the desired moisture and degree of roast, are then preferably cooled to a temperature suitable for pressing and are then pressed by a technique which is suitable for extracting and efficiently removing from the extraction zone from about 20 to about 60% of the initial

0168210

- 10 -

oil content of the nut. The temperature of the nuts during pressing should be maintained to achieve efficient oil removal. Temperatures of from about 20° to about 50°C are typical of those effective. Cooling can be achieved by any suitable means, such as by forced draft ambient air cooling tunnel.

After cooling, the nuts are pressed by means such as shown schematically in the figures at pressures which increase stagewise up to about 2500 psig for from about 10 to about 20 minutes. It has been determined according to the present invention that the use of the relatively high moisture contents, e.g., of from about 5 to 7%, results in decreased extraction rates and increased processing times when the nuts are pressed in conventional cage-type presses of the Carver or Anco type. These presses, as well as others, conventionally employ large diameter platens with substantially flat, unvented surfaces. Movement of the platens together under pressure causes lipid material to be exuded from the nuts, but due to the plasticity of the nuts and the composition of the lipid material being exuded at these high moisture contents, the flow of the lipid material from the press cake is greatly restricted. For example, a typical press will include substantially flat metal plates having a diameter of about 20 inches, causing the lipid material to move as much as ten inches through the bed of nuts which is being compressed into a press cake. The resistance to flow causes impractically long pressing times at the higher moisture contents found to be advantageous according to the present invention.

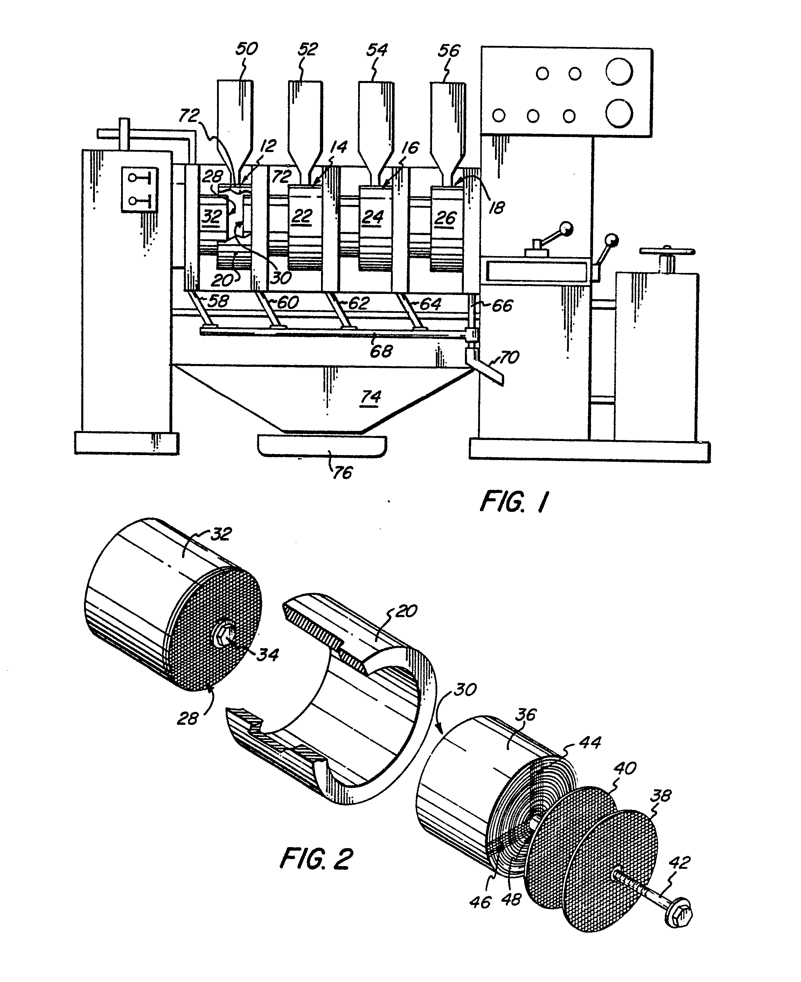

Reference to Figs. 1 and 2 shows a type of press which has been found to overcome these difficulties and to permit rapid and efficient oil removal, even at moisture contents in the preferred range of 5 to 7%. Fig. 1 schematically represents in front elevation a press having four chambers 12, 14, 16 and 18. Each of these chambers is defined by an outer cylindrical wall, showing the drawings as 20, 22, 24 and 26, and two opposed platens, two of which can be seen in the broken-away view in Fig. 1 . There, the outer cylindrical wall 20 is shown partially broken away revealing the interior of the chamber 12 and the associated platens 28 and 30. Reference to Fig 2 shows an exploded, enlarged schematic view of the component parts of chamber 12. The platen 28 is shown there to have a foraminous surface, being covered by a series of mesh screens constructed of stainless steel wires. The screens are secured to the platen body 32 by suitable means such as bolt 34. The detail of the screens and the method of attachment to a platen body can be seen better by reference to the platen body 36 which is adapted to hold screens on each of its opposed surfaces. Platen surface 30 will slide into chamber wall 20 to oppose platen surface 28 which will also slide therein. Each of the platen surfaces will preferably be formed with a foraminous surface including screens such as 38 and 40, again secured by suitable means such as bolts 42. The preferred arrangement will include three screens of increasing coarseness from the other pressing surface to the supporting rear surface. In one preferred arrangement, the outermost fine screen will have 12 wires by 250 wires per square inch, the middle screen will have 20 wires by 20 wires per square inch, and the base screen will have 14 wires by 14 wires per square inch. The screens will overly a platen body having a series of oil releases passages formed therein. As shown in the drawings, platen body 36 contains a series of concentric circular grooves 44 which are radially interconnected by a separate series of diametrically positioned grooves 46 and 48.

In operation, nuts will be filled into the pressing chamber in the configuration shown in Fig. 1 to substantially completely fill the chamber defined by, for example, chamber wall 20 and opposed platens 28 and 30 which are positioned perpendicular to the central axis of the chamber wall. Filling of the chambers is accomplished, for example, by feeding measured amounts from hoppers 50, 52, 54 and 56 into their respective chambers. Upon completion of the filling operation, hydraulic pressure is applied from means (not shown) to platen body 32 which then forces platen 28 against 30 and platen body 36 against the next successive platen on down the line towards the right side of the drawing. The chamber walls 12, 14, 16 and 18 are slidably engaged on means not shown to progress with the movement of the platens and the nuts charged within the chambers to maintain them in totally enclosed relation. As the nuts are compressed between the platens as they move together under pressure, oil is expressed and passes through the foraminous surface on the platens for discharge efficiently by means of grooves 44, 46 and 48 in the platen body from which it flows from the chambers through oil discharge ducts 58, 60, 62, 64 and 66 in the accompanying manifold 68 and discharge tube 70.

The distance between the opposed platens in any chamber, such as 28 and 30 in chamber 12, is preferably less (when full but prior to pressing) than the diameter of the platens. This will most preferably be less than 150 mm. When the suitable amount of pressure is applied to achieve the desired degree of extraction, the platens, of course, will be spaced at a lesser distance, thus decreasing proportionally to the degree of pressing the distance which the lipid material expressed from the nuts must travel to be removed through the foraminous surface of the platens and the associated means for removing it from the chamber. Most preferably, the platen separation upon completion of pressing will be about one half of the spacing prior to pressing.

A press which can be employed effectively for the purposes of the present invention is constructed by the Carle & Montanari Inc. Company for the purpose of extracting cocoa butter from liquid cocoa slurries. Presses of this type can be modified to achieve the purposes of the present invention simply by proving suitable feeding means which can be simply enlarged feed openings such as at 72 in chamber 12 and an appropriate hopper such as those shown as 50, 52, 54 and 56.

Upon completion of the pressing operation, the chambers are opened in their normally designed fashion by moving platen body 32 hydraulically to the left which causes the movement also of the remainder of the platen bodies to remove the leftmost platen from within the chamber wall of each chamber. The nuts are then discharged into shoot 74 and collection bin 76. To begin the next cycle, the platen body 32 is again hydraulically moved to the right to the position shown in Fig. 1 for loading the next successive charges into the individual pressing chambers. It will be realized that a greater number or a lesser number, even a single, chamber can be employed where desired.

The exact times and pressures for oil extraction can be varied as desired to obtain the desired degree and rate of extraction, the pressure is preferably brought stagewise to the desired maximum pressure over a period of about 15 minutes. The pressure application will stagewise be brought up to the pressure of about 2500 psig.

The nuts are flattened and undesirably dense after the pressing operation and must be treated, such as by hydration, to return them to approximately their natural shape. It is an advantage of the process of the invention that the nuts are loosely packed and do not adhere into a solid mass. They can be returned to approximately their original size and shape with minimal addition of water. It is desired to obtain bulk densities of less than about 0.50 grams per cubic centimeter for uncoated, oil-roasted nuts, and most desirably within the range of from about 0.40 to 0.45 grams per cubic centimeter. Products prepared according to the invention having these bulk densities offer significant calorie reductions on a volume basis while still retaining a nut-like crunch and chew. These bulk densities are determined by filling a 500 cubic centimeter graduated cylinder with nuts, determining the weight of the nuts, and dividing the weight in grams by the volume in cubic centimeters.

The distorted, partially-defatted nuts are preferably hydrated by contacting them with water, typically at a temperature of about 20°C. Higher water temperatures, in the range of from about 20°C to 75°C also may be used. The contacting is conducted for a period of time sufficient to absorb sufficient water to cause the nuts to regain approximately their normal shape upon final roasting. Depending upon the degree of hydration, the nuts may expand immediately or only during roasting. Typically, moisture contents of less than 30%, preferably less than 25%, and most preferably from about 7 to less than 10%, based upon the total weight of the rehydrated nuts, will be effective. Limiting the water content during this stage in processing minimizes the removal of flavors developed during the initial roast. Moreover, it decreases the chance that flavor precursors will be leached by the rehydration medium, and the loss of flavors developed during final roasting by a mechanism thought to be akin to steam distillation where the escaping steam carries off the volatile flavors. The water can be contacted by immersion or spraying, with spraying being preferred. The water can contain any suitable texturizing of flavoring additives as may be desired.

The rehydrated, partially-defatted nuts must be dried and roasted to obtain the final roasted nut product. Roasting and drying are typically conducted at the same time and can be accomplished in any suitable manner. Typically, the art recognized techniques of dry roasting and oil roasting are effective to achieve the desired degree of flavor and color development while at the same time drying the nuts to a moisture content which is effectively low to provide the desired crunch and chew properties. Typical roasting

0168210

- 16 -

temperatures of from about 120°C to about 185°C, preferably from about 135°C to about 175°C can be employed. Typical oil roasting times will be within the range of from about 2 to about 10 minutes, and more preferably will be within the narrower range of from about 4 to 6 minutes. One preferred set of conditions involves roasting at 165°C for 4.5 minutes.

The final roasting step should be sufficient in intensity and duration to achieve the optimum flavor and color development desired for the particular product end-use. As is the case of the initial roasting operation, the moisture content will most usually be reduced to a level of less than about 3% and preferably is reduced to a level of at least 2% or less, most preferably about 1.5%. Again here, in the case of blanched peanuts, the Agtron color photometer can be employed to standardize the degree of roast. In one typical operation, the device is employed in the green mode with 0 and 75% plates defining the scale on which a reading of from about 35 to about 60 is preferred. Most preferably, the reading will be within the range of from 40 to 45.

When the desired degree of roast is achieved, it is important to reduce the temperature of the nuts rapidly so that they do not become badly over-roasted or burned. This can be accomplished by dumping them rapidly from the roasting apparatus and flushing them with a stream of ambient air. Where the nuts are allowed to drop from the roasting apparatus and flushing them with a stream of ambient air. Where the nuts are allowed to drop from the roasting apparatus for a significant fall and are spread uniformly on an open mesh conveyor, it is usually not necessary to overtly blow air onto the hot nuts to achieve cooling.

After the roasting operation, and preferably after cooling, the nuts can be coated with various flavoring agents, allspice, cinnamon, clove, carroway, bay, sage, ginger, basil, and the like, which can be employed alone or with condiments such as salt, pepper, monosodium glutamate, and the like; texturizers such as glycerine; and binders such as natural gums, dextrins, gelatin, sugars, and the like. Where the nuts are dry roasted, a portion or all of the added materials can be introduced prior to completion of the roasting operation.

The following examples are presented for the purpose of further illustrating and explaining the present invention and are not to be taken as limiting in any regard. Unless otherwise indicated, all parts and percentages are by weight, and are based on the total weight of the product at that particular stage in processing.

## EXAMPLE

This example illustrates the production of partially-defatted roasted peanuts according to the present invention.

Raw redskin Virginia extra large peanuts (7% water) are sprayed with sufficient water to raise their moistures to 11% and held for five minutes under ambient conditions during which the moisture is absorbed. The nuts are then preroasted in a forced draft oven at 160°C for 6 minutes and 15 seconds to develop flavor and color in the nut prior to pressing. The roasted nuts have a moisture content of approximately 5% upon

removal from the roaster and cooling to room temperature by forced draft ambient air (20°C). The nuts are then blanched by means of a whole nut blancher, color sorted, and tested on an Agtron color photometer in the green mode employing the 12 and 90% plates. The peanuts exhibit a reading of about 33. After blanching, the peanuts are placed into a Carle & Montanari four pot press having platens with diameters of 350 mm, spaced at 90 mm prior to pressing and at about 45 mm upon completion of the pressing cycle. The pressure is applied to the platens stagewise over a fifteen minute period. The pressure is raised to a maximum of 2500 psi. Pressing under these conditions removes about 52% of the original oil content of the peanuts. The partially-defatted nuts are then sprayed with water at 20°C. The peanuts at this point in processing contain about 7% moisture. The rehydrated peanuts are then immersed in vegetable oil maintained at 165°C for about 5.5 minutes to achieve the final roast which indicates a 40 reading on the Agtron color photometer employed in the green mode with the scale defined by the 0 and 75% plates. This product exhibits a bulk density of about 0.44 grams per cubic centimeter and has an acceptable appearance, in terms of the number of cracks, and has good texture and good flavor.

The above description is presented for the purpose of teaching the person of ordinary skill in the art of how to make and use the invention. It is not intended to detail all those obvious modifications and variations of the invention which will become apparent to the skilled worker upon reading the description. It is intended, however, that all such obvious modifications and variations be included within the scope of invention.

CLAIMS

1. A process for preparing roasted, partially-defatted nuts comprising: feeding pre-roasted nuts, having a uniform moisture content, into a pressing chamber defined by a cylindrical chamber wall and two opposed platens perpendicular to the central axis of the chamber wall; decreasing the distance between the platens to press the nuts sufficiently to express oil from the nuts; removing oil expressed from the nuts through discharge opening in at least one of said platens; hydrating the nuts to a moisture content sufficient to cause the nuts to regain approximately their normal shape; and roasting the nuts.

2. A process according to claim 1 wherein the distance between the platens when the chamber is full but prior to pressing is smaller than the diameter of the platens.

3. A process according to claim 2 wherein the distance between the platens when the chamber is full is less than 150 mm.

4. A process according to claim 1, 2 or 3 wherein at least one platen includes means for removal of the oil expressed from the nuts, comprising a foraminous surface covering a platen body which includes channels in communication with said foraminous surface.

5. A process according to claim 4 wherein both platens include means as defined therein for removal of the oil expressed from the nuts.

6. A process according to claim 4 or 5 wherein said foraminous surface comprises a mesh of steel wires.

7. A process according to any preceding claim wherein the nuts are pressed sufficiently to remove from about 20 to about 60% of the oil content of the nuts.

8. A process according to claim 7 wherein the nuts are pressed to remove from about 35 to about 55% of the oil.

9. A process according to any preceding claim wherein the nuts are peanuts which have been roasted sufficiently to develop a roasted peanut flavor and a color value of from 25 to 40 as measured by an Agtron color photometer employing the 12 and 90% plates in the green mode.

10. A process according to any preceding claim wherein the initial roasting is done by air roasting at a temperature of from about 135°C to 175°C for a time of from about 2 to 60 minutes to a moisture content of from about 5 to about 7% by weight, and the nuts are cooled prior to pressing.

11. A process according to any preceding claim wherein the nuts are blanched peanuts at a moisture content prior to pressing of 4 to 8% by weight.

0168210

12.    A process according to any preceding claim wherein the moisture content of the nuts prior to final roasting is within the range of from about 8 to about 12%.

13. A process according to claim 12 wherein the nuts are rehydrated to a moisture content within the range of from about 7 to about 10%.

14. A process according to any preceding claim wherein the nuts are peanuts and the roasting after pressing is continued until the color reaches a value of from about 35 to 45 as measured by an Agtron color photometer employing the 0 and 75% plates in the green mode.

15. A process for preparing roasted, partially defatted peanuts comprising:

preparing peanuts for pressing by pre-roasting them sufficiently to produce a roasted peanut flavor and color and by obtaining a uniform moisture content of from 5 to 7%;

feeding the peanuts into a pressing chamber defined by a cylindrical chamber wall and two opposed platens having foraminous surfaces and positioned perpendicular to the central axis of the chamber wall at a distance less than the diameter of the chamber;

pressing the peanuts between the platens to express from about 20 to about 60% of the original oil content of the peanuts;

removing oil from the peanuts through the foraminous platen surfaces;

hydrating the peanuts to a moisture content sufficient to cause the peanuts to regain approximately their normal shape during a roasting step; and

roasting the peanuts.

FIG. 1

FIG. 2